# EUROPÄISCHE PATENTANMELDUNG

(11) **EP 2 116 370 A1**
(43) Veröffentlichungstag der Anmeldung: **11.11.2009**
(21) Anmeldenummer: 08008489.0
(22) Anmeldetag: 06.05.2008
(51) Int. Cl.: B32B 27/10, B32B 27/32, B32B 29/00

(54) **Lackier- bzw. klebfähige Bahnen oder Platten aus faserverstärktem Polypropylen**

(71) Anmelder: Quadrant Plastic Composites AG, 5600 Lenzburg (CH)
(72) Erfinder: Zingraff, Joelle, 8806 Zürich (CH); Adamo, Nicola, 20154 Milano (IT)
(74) Vertreter: Schmauder & Partner AG Patent- & Markenanwälte VSP

(57) **Zusammenfassung**

Lackier- bzw. klebefähige Bahnen oder Platten aus faserverstärktem Polypropylen sind auf einer oder beiden Oberflächen direkt mit Kraftpapier verbunden. Zur Herstellung der Bahnen bzw. Platten wird Kraftpapier bei Temperaturen oberhalb des Erweichungsbereichs des Polypropylens mit- bzw. aufgepresst.

## Beschreibung

Die Erfindung betrifft lackier- und klebfähige Bahnen oder Platten aus faserverstärktem Polypropylen.

Flächige Halbzeuge aus faserverstärktem Polypropylen werden in zunehmendem Masse zur Herstellung vor allem von Kraftfahrzeugteilen verwendet. Dabei wird bei vielen Anwendungen gefordert, dass die Halbzeuge bzw. daraus hergestellte Formteile lackierbar oder mit anderen Substraten verklebbar sind. Polypropylen ist jedoch aufgrund seiner unpolaren Struktur nicht ohne weiteres verkleb- bzw. lackierbar. Dies kann zwar durch aufwendige Vorbehandlung, z.B. durch Beflammen, Koronabehandlung oder Primerapplikation erreicht werden; diese Oberflächenaktivierungen reichen aber vielfach nicht aus, um dauerhafte temperatur- und medienbeständige Haftung zu erzielen.

In der Praxis werden daher Vliese, z.B. aus Polyethylenterephthalat oder Polyamid auf erweichte Polypropylenflächen gepresst, um eine physikalische Verbindung mit dem Polypropylen zu erzielen. Hierbei kann es jedoch passieren, dass das Vlies vom flüssigen Polypropylen teilweise oder ganz durchtränkt wird, wodurch wiederum eine teilweise oder vollständig nicht klebfähige Oberfläche entsteht. Bei zu geringer Durchtränkung kann es wiederum zu einer Trennung der Schichten (Delamination) kommen.

Der Erfindung lag nun die Aufgabe zugrunde, ein gut lackier- und klebfähiges Halbzeug aus faserverstärkten Polypropylen-Bahnen oder -platten bereitzustellen, das nach einem einfachen Verfahren hergestellt werden kann.

Diese Aufgabe wird erfindungsgemäss durch Bahnen oder Platten aus faserverstärktem Polypropylen gelöst, die auf einer oder auf beiden Oberflächen direkt mit Kraftpapier verbunden sind.

Kraftpapier ist als Handelsprodukt wohlbekannt. Es handelt sich um ein hochwertiges, hochfestes Papier, das zu fast 100% aus Zellstofffasern auf Basis ausgewählter Nadelhölzer besteht. Das Papier kann zusätzlich auch durch Füllstoffe, z.B. mit Carbiden zur Verbesserung der Oberflächenhärte, oder mit Graphit zur Schaffung einer elektrischen Leitfähigkeit, modifiziert werden.

Wesentlich ist, dass die Bahnen bzw. Platten direkt mit dem Kraftpapier verbunden sind. Dies kann dadurch erreicht werden, dass bei der Herstellung des erfindungsgemässen Halbzeugs flüssiges Polypropylen auf das Kraftpapier gepresst wird, wobei das Polypropylen in die oberflächlichen Poren des Papiers eindringt und nach der Abkühlung dort fest verankert wird. Bevorzugt ist Kraftpapier mit einem Flächengewicht von 50 bis 500 g/m², vorzugsweise von 100 bis 350 g/m² und insbesondere von 150 bis 250 g/m². Durch dieses hohe Flächengewicht wird verhindert, dass das flüssige Polypropylen das Papier durchdringt und auf der gegenüberliegenden Oberfläche austritt und dadurch die Lackier- und Klebbarkeit behindert.

Das Polypropylen weist vorzugsweise einen Schmelzindex MFI (230°C, 2.16 kp nach DIN 53735 von 20 bis 200 g/10 min auf. Die Bahnen oder Platten enthalten vorzugsweise 10 bis 70 Gew.-%, insbesondere 20 bis 50 Gew.-% Fasern, vorzugsweise Glasfasern. Daneben sind auch Fasern aus Kohlenstoff, Aramid, Naturfasern und Basalt geeignet. Die Fasern können z.B. in Form von Matten, Geweben, Gelegen oder Kombinationen davon vorliegen. Die Bahnen oder Platten sind im Allgemeinen 0.5 bis 8 mm, insbesondere 1 bis 5 mm dick. Sie können auch Luftporen, z.B. bis zu 10 Vol.-% enthalten. Bei höherem Porengehalt besteht die Gefahr, dass bei hohem Pressdruck das Schaumgefüge geschädigt wird. Platten, die mehr als 10 Vol.-% Luftporen enthalten, können dann mit Kraftpapier zusammen verpresst werden, wenn die Platte eine starre Deckschicht, z.B. aus glasfaserverstärktem Polypropylen mit matrixreicher Oberfläche aufweist. Derartige Platten sind vorzugsweise dann 5 bis 15 mm dick.

Die Herstellung der erfindungsgemässen Bahnen oder Platten kann kontinuierlich oder diskontinuierlich erfolgen.

Bevorzugt ist ein kontinuierliches Verfahren, bei dem Verstärkungsfaserbahnen und Polypropylenbahnen ein- oder beidseitig mit einer Kraftpapierbahn ein- oder beidseitig zusammen verpresst werden. Die Herstellung kann im Rahmen des an sich bekannten Herstellung von "GMT-Bahnen" erfolgen, wobei auf einer Doppelbandpresse genadelte Glasfasermatten und Polypropylen-Schmelzebahnen oder -Folien zusammengeführt und miteinander bei Drücken von 1 bis 8 bar und Temperaturen zwischen 170 und 240 °C miteinander verpresst werden. Dabei wird nun ein- oder beidseitig eine Kraftpapierbahn als Aussenschicht zugeführt.

Statt Glasfasermatten können dabei auch Glasfasergewebe oder -gelege eingesetzt werden, sowie Glasfasergewebe, auf die Wirrglasfasern aufgenadelt sind. Bevorzugte Schichtenfolgen sind Kraftpapierbahn - Polypropylenbahn - Glasmattenbahn oder Glasgewebebahn - Polypropylenbahn - Kraftpapierbahn, wobei schmelzflüssiges Polypropylen die Glasmatten bzw. Glasgewebe durchdringt, nicht aber das Kraftpapier. Eine weitere bevorzugte Schichtenfolge ist Kraftpapierbahn - Polypropylenbahn - Glasgewebe mit Wirrglasfasern vernadelt - Polypropylenbahn - Glasgewebe mit Wirrglasfasern vernadelt - Polypropylenbahn - Kraftpapierbahn.

Bei einem diskontinuierlichen Verfahren wird auf eine vorgefertigte Platte aus faserverstärktem Polypropylen ein- oder beidseitig Kraftpapier bei Temperaturen oberhalb des Erweichungsbereichs des Polypropylens aufgepresst.

Die erfindungsgemässen Bahnen oder Platten können mit üblichen flüssigen oder gelösten Lacken beschichtet werden, wobei eine gute Haftung erhalten wird. Grundsätzlich ist es auch möglich, Formteile, die aus dem erfindungsgemässen Halbzeug durch Heissverpressen hergestellt wurden, zu lackieren.

Die Bahnen oder Platten können auch mittels konventioneller Kleber, z.B. auf Phenolharz-, Polyurethan-, Acrylat-, Polyvinylacetat- oder Polychloropren-Basis, mit flächigen Substraten, z.B. aus Kunststoff, Metall, Holz, Gummi oder Stoff, verklebt werden.

### Beispiele

1. In eine Doppelbandpresse wurden kontinuierlich folgende Bahnen eingeführt:
Kraftpapier - Polypropylenschmelze - mit Wirrglasfasern vernadeltes Glasgewebe - Polypropylenschmelze.
Die einzelnen Schichten hatten folgende Flächengewichte:

| | |
|---|---|
| Kraftpapier: | 177 g/m² |
| Polypropylenschmelze: | 1340 g/m² |
| Glasgewebe: | 620 g/m² |
| Wirrglasfasern: | 200 g/m² |

Das Polypropylen hatte einen Schmelzindex von 120 g/10 min.
Die Bahnen wurden bei 210 °C und 5 bar 60 sec lang verpresst.
Nach dem Abkühlen wurde eine 1.8 mm dicke Bahn mit einer Dichte von 1.2 g/cm³ und einem Flächengewicht von 2350 g/m² erhalten. Aus dieser Bahn wurden Platten mit den Abmessungen 1400 x 3500 mm abgeschnitten, die mittels eines phenolharzbasierten Klebers mit Sperrholz verklebt wurden. Diese Sandwichplatten eignen sich z.B. als Betonschalungstafeln.
2. In einer Plattenpresse wurden diskontinuierlich bei 210°C mit 0.5 bar folgende Schichten 3 min lang miteinander verpresst:
Kraftpapier - porenfreies, glasfaserverstärktes Polypropylen mit einem Glasgehalt von 40 Gew.-% (GMT) - glasfaserverstärktes Polypropylen mit einem Luftporengehalt von 55 Vol.-% und einem Glasgehalt von 40 Gew.-% - porenfreies, glasfaserverstärktes Polypropylen mit einem Glasgehalt von 40 Gew.-% - Kraftpapier.
Die einzelnen Schichten hatten folgendes Flächengewicht:

| | |
|---|---|
| Kraftpapier: | 250 g/m² |
| GMT: | 2160 g/m² |
| poröse Leichtplatte: | 3400 g/m². |

Auf die erhaltene, 11 mm dicke Platte wurde mittels eines polychloroprenbasierten Klebers eine 7 mm dicke Gummischicht geklebt. Diese Platte kann z.B. als Abdeckung von LKW-Ladeböden verwendet werden.

## Patentansprüche

1. Lackier- bzw. klebefähige Bahnen oder Platten aus faserverstärktem Polypropylen, **dadurch gekennzeichnet, dass** sie auf einer oder beiden Oberflächen direkt mit Kraftpapier verbunden sind.

2. Bahnen oder Platten nach Anspruche 1, **dadurch gekennzeichnet, dass** Polypropylen in die Oberfläche des Kraftpapiers eingedrungen und dort verankert ist, wodurch die Verbindung gewährleistet ist.

3. Bahnen oder Platten nach Anspruch 1, **dadurch gekennzeichnet, dass** die Verstärkungsfasern Glasfaser-Matten, -Gewebe oder -Gelege oder Kombinationen davon sind.

4. Bahnen oder Platten nach Anspruch 1, **dadurch gekennzeichnet, dass** das Kraftpapier ein Flächengewicht von 50 bis 300 g/m², vorzugsweise von 100 bis 260 g/m² aufweist.

5. Kontinuierliches Verfahren zur Herstellung der Bahnen nach Anspruch 1, **dadurch gekennzeichnet, dass** Verstärkungsfaserbahnen und Polypropylenbahnen bei Temperaturen oberhalb des Erweichungsbereichs des Polypropylens ein- oder beidseitig mit einer Kraftpapierbahn als Aussenschicht zusammen verpresst werden.

6. Verfahren nach Anspruch 5, **dadurch gekennzeichnet, dass** die Polypropylenbahnen Schmelzebahnen oder Folienbahnen sind.

7. Verfahren nach Anspruch 5, **dadurch gekennzeichnet, dass** die Verstärkungsfaserbahnen Matten, Gewebe, Gelege oder Kombinationen davon sind.

8. Diskontinuierliches Verfahren zur Herstellung der Platten nach Anspruch 1, **dadurch gekennzeichnet, dass** auf eine Platte aus faserverstärktem Polypropylen ein- oder beidseitig Kraftpapier bei Temperaturen oberhalb des Erweichungsbereichs des Polypropylens aufgepresst wird.
